# EUROPÄISCHE PATENTANMELDUNG

(11) **EP 2 423 552 A1**
(43) Veröffentlichungstag der Anmeldung: **29.02.2012**
(21) Anmeldenummer: 11176546.7
(22) Anmeldetag: 04.08.2011
(51) Int. Cl.: F16L 13/14

(54) **Anschlussteil, Anschlussverbindung und Schlauchleitung sowie Verfahren zu deren Herstellung, insbesondere für Gasinstallationen**

(30) Priorität: 24.08.2010 DE 102010035255
(71) Anmelder: Witzenmann GmbH, 75175 Karlsruhe (DE)
(72) Erfinder: Bonanno, Daniel, 75172 Pforzheim (DE); Paulig, Dr. Gerd, 75248 Ölbronn-Dürm (DE); Stahl, Robert, 75173 Pforzheim (DE)
(74) Vertreter: Nübold, Henrik

(57) **Zusammenfassung**

Vorgeschlagen wird ein Anschlussteil (1) für ein Leitungselement, insbesondere einen ummantelten Wellschlauch (6), vorzugsweise für Gasinstallationen, mit einem aufweitbaren Einführabschnitt (2), der zum Einführen in das Leitungselement vorgesehen ist, und mit einem Anschlussabschnitt (3) zum Anschließen an weitere Teile einer Installation, insbesondere einer Gasinstallation, wobei der Einführabschnitt (2) zumindest abschnittweise einen geringeren Innendurchmesser (ID) als der Anschlussabschnitt (3) aufweist, und wobei an dem Anschlussabschnitt (3) ein axial vorstehender Bord (5a) ausgebildet ist, welcher den Einführabschnitt (2) mit radialem Abstand über wenigstens einen Teil der Längserstreckung des Einführabschnitts (2) in Richtung eines freien Einführendes (2a) übergreift.

## Beschreibung

Die vorliegende Erfindung betrifft ein Anschlussteil gemäß Patentanspruch 1 für ein Leitungselement, beispielsweise einen ummantelten Wellschlauch, vorzugsweise für Gasinstallationen.

Weiterhin betrifft die Erfindung eine Anschlussverbindung gemäß Patentanspruch 12 zwischen einem Leitungselement, beispielsweise einem Wellschlauch mit einer Ummantelung, und einem erfindungsgemäßen Anschlussteil.

Außerdem betrifft die Erfindung eine Fluidleitung gemäß Patentanspruch 18 mit einem Leitungselement und wenigstens einem erfindungsgemäßen Anschlussteil sowie Verfahren zur Herstellung der genannten Anschlussverbindung bzw. der genannten Fluidleitung.

Fluidleitungen der genannten Art, welche sich insbesondere für Gasinstallationen eignen, und entsprechende Anschlussteile bzw. Anschlussverbindungen sind bekannt, wozu beispielsweise auf die US 7,607,700 B2, die JP 2004316733 A, die JP 2005321102 A sowie die DE 103 32 130 B4 hingewiesen wird.

Bei diesen vorbekannten Lösungen ist insbesondere als nachteilig anzusehen, dass die Ummantelung von Leitungselementen in Form von Gas-Wellschläuchen oft nicht mit in die Anschlüsse (Anschlussteile) integriert wird, so dass hier die Möglichkeit eines Korrosionsangriffs auf den innenliegenden Wellschlauch besteht.

Bei den aus dem Stand der Technik bekannten abgedichteten Verbindungen sind entweder sehr viele Einzelteile für die Schaffung der Verbindung erforderlich, was einen erhöhten Fertigungs- und Kostenaufwand verursacht, oder es wird im Verbindungsbereich eine sehr gute Schnittqualität beim Ablängen des Leitungselements, beispielsweise also des Wellschlauchs und ggf. der Ummantelung benötigt, was ebenfalls einen erhöhten Fertigungsaufwand bedeutet und entsprechende Kostennachteile bewirkt.

Der Erfindung liegt die Aufgabe zugrunde, ein Anschlussteil, eine Anschlussverbindung sowie eine Fluidleitung der genannten Art und entsprechende Herstellungsverfahren dahingehend weiterzuentwickeln, dass in einfacher und kostengünstiger Weise eine in die Anschlüsse integrierte äußere Abdichtung von Leitungselementen, insbesondere von Wellschläuchen mit Ummantelung und insbesondere für Gasinstallationen, ermöglicht wird, um auf diese Weise das Risiko von Korrosionsangriffen zu verringern.

Die Aufgabe wird erfindungsgemäß gelöst durch ein Anschlussteil mit den Merkmalen des Patentanspruchs 1, eine Anschlussverbindung mit den Merkmalen des Patentanspruchs 92, eine Fluidleitung mit den Merkmalen des Patentanspruchs 18 sowie ein Verfahren zum Herstellen einer Anschlussverbindung und ein Verfahren zum Herstellen einer Fluidleitung mit den Merkmalen des Patentanspruchs 20 bzw. 22.

Dabei setzen insbesondere die Herstellungsverfahren auf einer von der Anmelderin in der DE 10 2007 042 605 A1 offenbarten Lehre auf. Das dort beschriebene Weitverfahren zum Verbinden eines Wellschlauchs mit einem Anschlussteil wird erfindungsgemäß um die Zusatzfunktion einer Außenabdichtung ergänzt, vorzugsweise bei gleichzeitiger Einbindung einer Ummantelung, sofern vorhanden. Dazu erhält das erfindungsgemäße Anschlussteil einen axial vorstehenden, im Durchmesser fixen Bord oder Ring (nachfolgend verallgemeinernd nur als "Bord" bezeichnet), welcher radial von dem restlichen Anschlussteil und insbesondere von dessen Einführabschnitt beabstandet ist und welcher eine entsprechende Hinterschneidung (Hinterschnitt) definiert. Die Hinterschneidung dient zum Aufnehmen des Leitungselements oder zumindest der (Wellschlauch-)Ummantelung. Anschließend wird die Anschlussverbindung bzw. die Fluidleitung durch Aufweiten des Anschlussteils im Bereich des Einführabschnitts von innen gegen das Leitungselement hergestellt. Letzteres ist dann zwischen dem aufgeweiteten Einführschnitt einerseits und dem fixen Bord des Anschlussteils andererseits klemmend gehalten, wobei das Eindringen von Fluid von außen in den Schnittkantenbereich des Leitungselements verhindert wird.

Erfindungsgemäß zeichnet sich daher ein Anschlussteil für ein Leitungselement, vorzugsweise für Gasinstallationen, im unverformten, unverbundenen Zustand durch folgende Merkmale aus: Das Anschlussteil umfasst einen aufweitbaren Einführabschnitt, der zum Einführen in das Leitungselement vorgesehen ist, und einen Anschlussabschnitt zum Anschließen an weitere Teile einer Installation, vorzugsweise Gasinstallation, wobei der Einführabschnitt zumindest abschnittweise einen geringeren Innendurchmesser als der Anschlussabschnitt aufweist, und wobei an dem Anschlussabschnitt ein axial vorstehender Bord angeordnet ist, welcher den Einführabschnitt mit radialem Abstand über wenigstens einen Teil der Längserstreckung des Einführabschnitts in Richtung eines freien Einführendes übergreift.

Weiterhin schlägt die Erfindung die Schaffung einer Anschlussverbindung zwischen einem Leitungselement und einem erfindungsgemäßen Anschlussteil vor, wobei das Leitungselement oder zumindest eine Ummantelung des Leitungselements mit seinem bzw. ihrem einen Ende in die durch den Bord gebildete Hinterschneidung eingeführt und dort durch Aufweitung des Anschlussteils im Bereich des Einführabschnitts kraft- und/oder formschlüssig gehalten ist, wobei der Bord das Leitungselement oder zumindest das Ende der Ummantelung radial außen umgibt.

Weiterhin schafft die Erfindung eine Fluidleitung mit einem Leitungselements und wenigstens einem erfindungsgemäßen Anschlussteil, wobei zwischen dem Leitungselement und dem Anschlussteil eine erfindungsgemäße Anschlussverbindung ausgebildet ist, wobei das Leitungselement oder zumindest eine Ummantelung des Leitungselements mit seinem bzw. ihrem einen Ende in die durch den Bord gebildete Hinterschneidung eingeführt und dort durch Aufweitung des Anschlussteils im Bereich des Einführabschnitts kraft- und/oder formschlüssig gehalten ist, wobei der Bord das Leitungselement oder zumindest das Ende der Ummantelung radial außen umgibt.

Ein erfindungsgemäßes Verfahren zum Herstellen einer Anschlussverbindung zwischen einem Leitungselement und einem erfindungsgemäßen Anschlussteil zeichnet sich dadurch aus, dass das Leitungselement oder zumindest eine Ummantelung des Leitungselements mit seinem bzw. ihrem einen Ende in die durch den Bord gebildete Hinterschneidung eingeführt wird, und dass anschließend das Anschlussteil zumindest im Bereich des Einführabschnitts durch Einwirkung eines Aufweitwerkzeugs radial aufgeweitet wird, so dass das Leitungselement oder zumindest dessen Ummantelung kraft- und/oder formschlüssig in der Hinterschneidung gehalten ist, wobei der Bord das Leitungselement oder zumindest das Ende der Ummantelung radial außen umgibt.

Ein erfindungsgemäßes Verfahren zum Herstellen einer Fluidleitung mit einem Leitungselement und wenigstens einem erfindungsgemäßen Anschlussteil zeichnet sich dadurch aus, dass zwischen dem Leitungselement und dem Anschlussteil eine erfindungsgemäße Anschlussverbindung ausgebildet wird, vorzugsweise gemäß dem vorstehend definierten Herstellverfahren, wobei das Leitungselement oder zumindest die Ummantelung des Leitungselements mit ihrem einen Ende in die durch den Bord gebildete Hinterschneidung eingeführt wird, und wobei anschließend das Anschlussteil zumindest im Bereich des Einführabschnitts durch Einwirkung eines Aufweitwerkzeugs radial aufgeweitet wird, so dass das Leitungselement oder zumindest dessen Ummantelung kraft- und/oder formschlüssig in der Hinterschneidung gehalten ist, wobei der Bord das Leitungselement oder zumindest das Ende der Ummantelung des Leitungselements radial außen umgibt.

Wenn das Anschlussteil zumindest in seinem Aufweitungsbereich (Einführabschnitt) beispielsweise in Messing ausgebildet ist, kann hier eine Aufweitung im Bereich von etwa 10 % bezogen auf eine Außenabmessung des Anschlussteils erreicht werden. Die hierdurch erzielbare Auszugskraft beim Verpressen des Leitungselements, beispielsweise eines Wellschlauchs bzw. der Ummantelung eines solchen, ist zur Erfüllung der Anforderungen der einschlägigen Norm DIN EN 15286 ausreichend.

Wichtig ist dabei in allen Fällen, das der Bord beim Weiten des Anschlussteil seinen Durchmesser beibehält, um als äußere Anlage für das Leitungselement zu dienen.

Der Bord kann einstückig mit dem restlichen Anschlussteil ausgebildet sein. Allerdings ist die Erfindung nicht auf eine derartige Ausgestaltung beschränkt. Alternativ kann der Bord auch durch ein von dem restlichen Anschlussteil getrenntes Bauteil gebildet sein, beispielsweise durch eine Hülse oder einen Ring, welche/r das Anschlussteil im Bereich des Einführabschnitts umgibt und sich beim Weiten desselben - ebenso wie ein angeformter Bord - nicht mit verformt. Unter einem "Bord" wird somit im Rahmen dieser Beschreibung sowohl die einstückigangeformte als auch die separate Ausgestaltung verstanden, sofern nichts anderes angegeben ist.

Eine äußerst bevorzugte Weiterbildung des erfindungsgemäßen Anschlussteils sieht vor, dass der Bord als separates Bauteil in Form eines schlauchförmigen Elastomers bzw. Elastomerabschnitts ausgebildet ist. Vorteilhafterweise handelt es sich dabei um ein transparentes Elastomermaterial, um die Einstecktiefe eines mit dem Anschlussteil zu verbindenden Leitungselements im Bereich der Hinterschneidung visuell kontrollieren zu können.

Weiterhin hat es sich als besonders vorteilhaft erwiesen, wenn der Elastomerabschnitt gegenüber dem Anschlussteil, insbesondere gegenüber einer an dem Einführabschnitt außen vorgesehenen Stufe, einem verminderten Durchmesser aufweist. Auf diese Weise ist es möglich, den Elastomer mit einer gewissen Vorspannung an dem Anschlussteil zu montieren. Bezogen auf die erfindungsgemäße Anschlussverbindung bzw. die erfindungsgemäße Fluidleitung kann entsprechend vorgesehen sein, dass der Elastomerabschnitt auch gegenüber dem Leitungselement bzw. dessen Ummantelung das erwähnte Mindermaß aufweist, damit auch in diesem Bereich die Montage mit einer gewissen Vorspannung erfolgen kann.

Das Leitungselement kann im Rahmen der vorliegenden Erfindung insbesondere als Wellschlauch, ggf. mit einer Ummantelung, vorzugsweise umfassend ein Geflecht- oder Gestrickematerial und/oder eine Kunststoffhülle, ausgebildet sein, sodass sich eine flexible Fluid- bzw. Schlauchleitung ergibt. Alternativ kann das Leitungselement als einlagiges oder mehrlagiges und ggf. starres Rohrelement ausgebildet sein, vorzugsweise als Aluminiumrohr mit innerer und/oder äußerer Beschichtung, beispielsweise aus Polyethylen.

Im Zuge einer Weiterbildung des erfindungsgemäßen Anschlussteils ist vorgesehen, dass an dem Einführabschnitt wenigstens eine Umfangsnut ausgebildet ist. Vorzugsweise weist der Einführabschnitt jedoch mindestens zwei Umfangsnuten auf, nämlich eine erste und eine zweite Umfangsnut. In wenigstens einer der genannten Umfangsnuten kann ein Dichtelement aus einem Elastomermaterial angeordnet sein. Die andere Umfangsnut dient im verpressten Zustand, d. h. in dem aufgeweiteten Zustand des Anschlussteils vorzugsweise zu einer im Wesentlichen formschlüssigen Wechselwirkung mit einer Wellung (Wellental) eines als Wellschlauch ausgebildeten Leitungselements. Auf diese Weise lassen sich Dichtheit und/oder Auszugskraft der geschaffenen Anschlussverbindung zwischen Anschlussteil und Leitungselement bzw. Wellschlauch verbessern.

Um das Zusammenfügen des Anschlussteils und des Leitungselements, insbesondere im Falle einer Ausbildung als ummantelter Wellschlauch, zu erleichtern, sieht eine andere Weiterbildung des erfindungsgemäßen Anschlussteils vor, dass an dem Bord eine Einführschräge zum Einführen des Leitungsteils bzw. speziell des Wellschlauchs und/oder der (Wellschlauch)Ummantelung ausgebildet ist.

Um die Auszugskraft weiter zu vergrößern, sieht eine wieder andere Weiterbildung des erfindungsgemäßen Anschlussteils vor, dass innerhalb der durch den Bord gebildeten bzw. definierten Hinterschneidung, vorzugsweise an der radialen Innenseite des Bords, eine oberflächliche, vorzugsweise in Umfangsrichtung durchgehende Profilierung vorgesehen ist, beispielsweise nach Art eines Sägezahnprofils.

Im Zuge einer wieder anderen Weiterbildung des erfindungsgemäßen Anschlussteils kann vorgesehen sein, dass innerhalb der durch den Bord gebildeten bzw. definierten Hinterschneidung und hier vorzugsweise an der radialen Innenseite des Bords, eine umfänglich umlaufende Ausnehmung ausgebildet ist. Diese weist vorzugsweise eine derartige Formgebung auf, dass in ihr ein Wellenberg eines als Wellschlauch ausgebildeten Leitungselements - mit oder ohne Ummantelung - formschlüssig aufnehmbar ist. Auf diese Weise lässt sich insbesondere wiederum die Auszugskraft vergrößern.

Weiterhin kann bei einer anderen Ausgestaltung des erfindungsgemäßen Anschlussteils innerhalb der durch den Bord gebildeten bzw. definierten Hinterschneidung, vorzugsweise an der radialen Innenseite des Bords, eine umfänglich umlaufende Ausnehmung ausgebildet sein, in welcher ein Dichtelement aufgenommen oder zumindest aufnehmbar ist. Bei dem genannten Dichtelement handelt es sich vorzugsweise um eine O-Ring-Dichtung.

Zur weiteren Vergrößerung der Auszugskraft kann vorgesehen sein, dass innerhalb der durch den Bord gebildeten bzw. definierten Hinterschneidung, vorzugsweise an der radialen Innen- oder Außenseite des Bords, eine radial vorspringende Struktur ausgebildet ist, welche vorzugsweise umfänglich umlaufend ausgebildet ist.

Es ist im Rahmen der vorliegenden Erfindung - wie bereits ausgeführt wurde - nicht zwingend erforderlich, dass der Bord bzw. die dadurch definierte Hinterschneidung einstückig mit dem restlichen Anschlussteil ausgebildet ist. Eine andere Weiterbildung des erfindungsgemäßen Anschlussteils sieht dementsprechend vor, dass der Bord durch ein separates Bauteil gebildet ist, welches vorzugsweise die Form einer Hülse oder eines Rings bzw. eines Elastomerabschnitts annimmt, wobei das separate Bauteil vorzugsweise mit einer an dem Einführabschnitt außen vorgesehenen Stufe des Anschlussteils unter Bildung der genannten Hinterschneidung zusammenwirkt. Die genannte Stufe sorgt für eine definierte axiale Anordnung des separaten Bauteils, welches einen lichten Innendurchmesser aufweist, der entsprechend gegenüber dem Außendurchmesser des Anschlussteils in dem genannten Anordnungsbereich vergrößert ist, um die Hinterschneidung zu bilden und ein Einführen des Leitungselements zwischen Hülse/Ring einerseits und Anschlussteil andererseits zu ermöglichen. Die Anschlussverbindung erfolgt dann durch Verpressen des Leitungselements zwischen Anschlussteil und dem separaten Bauteil, wobei der Freiraum zwischen Anschlussteil und dem separaten Bauteil durch Aufweiten des Anschlussteils verringert wird, um das (ggf. ummantelte) Leitungselement zu fixieren.

Wenn das separate Bauteil in Form eines Elastomerabschnitts ausgebildet ist, weist dieser bezogen auf seinen Durchmesser vorteilhafterweise ein Mindermaß gegenüber einem Außendurchmesser des Anschlussteils im Bereich der Stufe einerseits und gegenüber dem Leitungselement bzw. dessen Ummantelung andererseits auf. Auf diese Weise lässt sich der Elastomerabschnitt mit Vorspannung sowohl an dem Anschlussteil als auch an dem Leitungselement montieren. Eine Ausbildung des Elastomerabschnitts in einem transparenten Material erlaubt vorteilhafterweise eine visuelle Inspektion der Anschlussverbindung von außen, worauf weiter oben bereits hingewiesen wurde.

Eine andere Weiterbildung der erfindungsgemäßen Anschlussverbindung sieht vor, dass das Leitungselement oder zumindest dessen Ummantelung durch Aufweitung des Anschlussteils im Bereich des Einführabschnitts kraft- oder formschlüssig auf dem Einführabschnitt bzw. zwischen Einführabschnitt und dem umgebenden starren Bord gehalten ist, wie dies für den Einführabschnitt allein grundsätzlich auch bereits aus der DE 10 2007 042 605 A1 bekannt ist.

In diesem Zusammenhang kann gemäß einer anderen Weiterbildung der erfindungsgemäßen Anschlussverbindung vorgesehen sein, dass das Leitungselement im Zuge einer Ausgestaltung als Wellschlauch mit einer Wellung, insbesondere einem Wellental, in die eine Umfangsnut und/oder in die Ausnehmung im Bereich der Hinterschneidung eingreift, worauf weiter oben bereits hingewiesen wurde, um die Auszugskraft zu vergrößern.

Eine wieder andere Weiterbildung der erfindungsgemäßen Anschlussverbindung sieht vor, dass das Leitungselement im Zuge einer Ausgestaltung als Wellschlauch mit einer Wellung, insbesondere einem Wellental, mit dem bereits angesprochenen Dichtelement zusammenwirkt, welches in eine Umfangsnut an dem Einführabschnitt des Anschlussteils eingebracht ist.

Weiterhin hat es sich im Rahmen der vorliegenden Erfindung als vorteilhaft erwiesen, wenn das Leitungselement im Zuge einer Ausgestaltung als Wellschlauch an seinem Einführende, welches in die durch den Bord des Anschlussteils definierte Hinterschneidung eingesteckt wird, auf einem Wellenberg getrennt wird bzw. getrennt wurde. Dies führt zu einer verminderten Wechselwirkung zwischen Anschlussteil und Wellschlauch in radialer Richtung im Bereich des aufweitbaren Einführabschnitts bzw. bei dessen Aufweitung, was sich positiv auf die axiale Positionierung des Anschlussteils auswirkt und die erreichbare Qualität der Anschlussverbindung positiv beeinflussen kann.

Weitere Eigenschaften und Vorteile der vorliegenden Erfindung ergeben sich aus der nachfolgenden Beschreibung von Ausführungsbeispielen anhand der Zeichnung.
- Figur 1: zeigt eine Ausgestaltung des erfindungsgemäßen Anschlussteils, teilweise im Längsschnitt;
- Figur 2: zeigt eine erste Ausgestaltung der erfindungsgemäßen Anschlussverbindung zwischen einem Wellschlauch, einer Well-schlauch-Ummantelung und dem Anschlussteil gemäß Figur 1, vor Einwirkung des Aufweitwerkzeugs;
- Figur 3: zeigt die Anschlussverbindung gemäß Figur 2 nach erfolgter Einwirkung des Aufweitwerkzeugs;
- Figur 4: zeigt im Detail eine weitere Ausgestaltung des erfindungsgemäβen Anschlussteils bzw. der erfindungsgemäßen Anschlussverbindung vor Einwirkung des Aufweitwerkzeugs;
- Figur 5: zeigt im Detail eine weitere Ausgestaltung des erfindungsgemäβen Anschlussteils bzw. der erfindungsgemäßen Anschlussverbindung vor Einwirkung des Aufweitwerkzeugs;
- Figur 6: zeigt im Detail eine weitere Ausgestaltung des erfindungsgemäβen Anschlussteils bzw. der erfindungsgemäßen Anschlussverbindung vor Einwirkung des Aufweitwerkzeugs;
- Figur 7: zeigt im Detail eine weitere Ausgestaltung des erfindungsgemä-βen Anschlussteils bzw. der erfindungsgemäßen Anschlussverbindung vor Einwirkung des Aufweitwerkzeugs;
- Figur 8: zeigt im Detail eine weitere Ausgestaltung des erfindungsgemäβen Anschlussteils bzw. der erfindungsgemäßen Anschlussverbindung vor Einwirkung des Aufweitwerkzeugs;
- Figur 9: zeigt eine weitere Ausgestaltung des erfindungsgemäßen Anschlussteils bzw. der erfindungsgemäßen Anschlussverbindung vor Einwirkung des Aufweitwerkzeugs;
- Figur 10: zeigt eine weitere Ausgestaltung des erfindungsgemäßen Anschlussteils bzw. der erfindungsgemäßen Anschlussverbindung vor Einwirkung des Aufweitwerkzeugs;
- Figur 11: zeigt im Detail eine weitere Ausgestaltung des erfindungsgemäβen Anscillussteils bzw. der erfindungsgemäßen Anschlussverbindung vor Einwirkung des Aufweitwerkzeugs; und
- Figur 12: zeigt eine weitere Ausgestaltung der erfindungsgemäßen Anschlussverbindung zwischen einem Wellschlauch, einer Well- schlauchummantelung und einem Anschlussteil ähnlich der Figur 4, vor Einwirkung des Aufweitwerkzeugs.

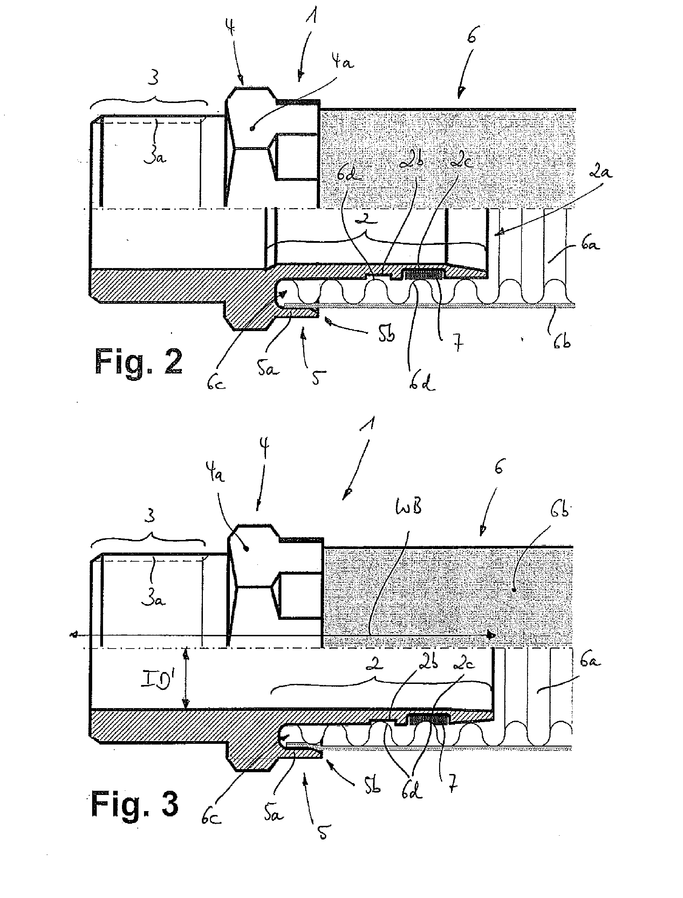

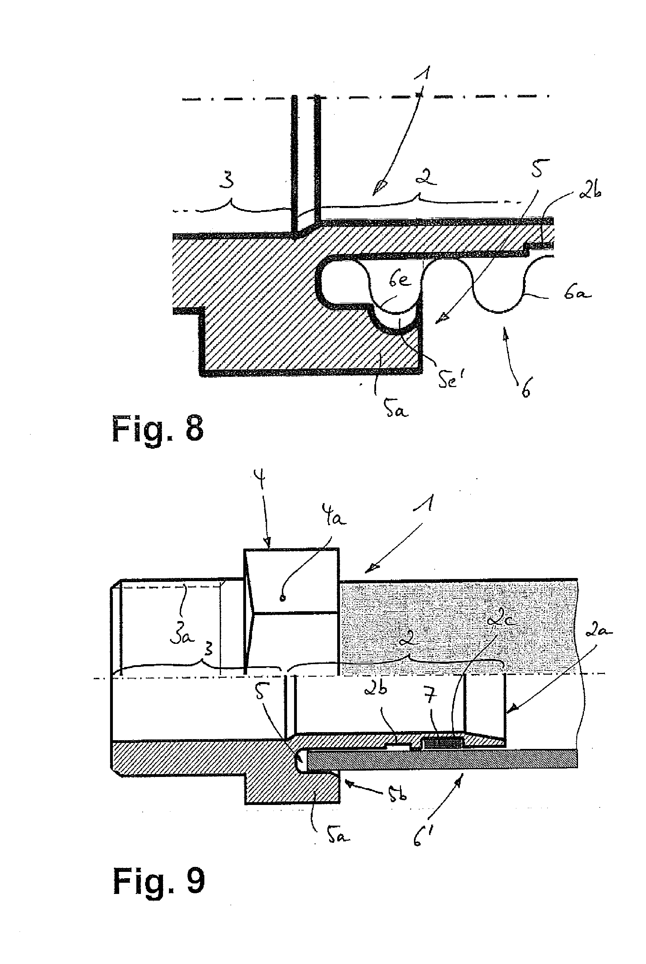

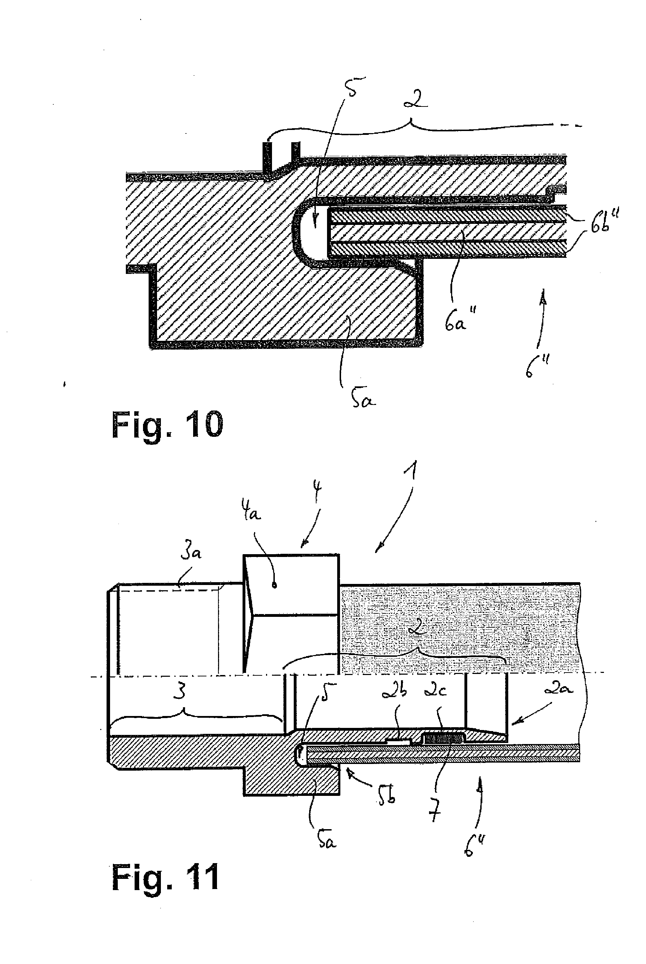

Die Figuren 2 bis 8 betreffen Ausgestaltungen der Erfindungsgegenstände, bei denen das Leitungselement als Wellschlauch ausgebildet ist. Mit Ausnahme der Figur 8 ist dabei jeweils - ohne Beschränkung der Allgemeinheit - ein ummantelter Wellschlauch dargestellt. Wie der Fachmann aber der weiteren Beschreibung und insbesondere den beigefügten Ansprüchen entnimmt, ist die Erfindung nicht auf derartige Ausgestaltungen beschränkt. Entsprechend zeigen die Figuren 9 bis 11 Ausgestaltungen, bei denen das Leitungselement ein glattzylindrisches Rohrelement ist, welches alternativ einlagig (Figur 9) oder mehrlagig (Figuren 10 und 11) ausgebildet sein kann.

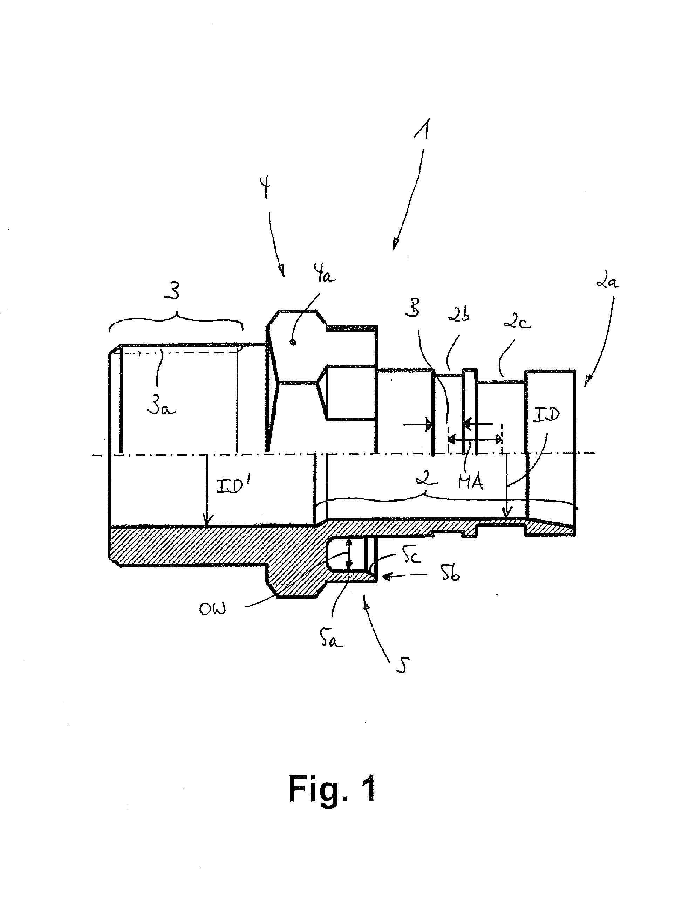

Das in Figur 1 gezeigte erfindungsgemäße Anschlussteil eignet sich grundsätzlich für eine Verwendung sowohl mit glattzylindrischen und/oder starren Leitungselementen (Rohrelementen) als auch mit flexiblen Schlauchelementen, insbesondere Wellschläuchen, jeweils mit oder ohne Ummantelung.

In Figur 1 ist ein erfindungsgemäßes Anschlussteil insbesondere für einen ummantelten Wellschlauch dargestellt, welches in seiner Gesamtheit mit dem Bezugszeichen 1 bezeichnet ist. Das Anschiussteil 1 weist einen aufweitbaren Einführabschnitt 2 und einen Anschlussabschnitt 3 auf. Zwischen den genannten Abschnitten 2, 3 ist gemäß Figur 1 noch ein weiterer Abschnitt 4 angeordnet, welcher eine Außenkontur 4a nach Art einer Mutter aufweist, so dass in diesem Bereich mittels eines geeigneten Werkzeugs auf das Anschlussteil 1 eingewirkt werden kann, insbesondere zu Installationszwecken, worauf vorliegend jedoch nicht weiter einzugehen ist. In dem Anschlussabschnitt 3 weist das Anschlussteil 1 eine Gewindestruktur 3a zum Verbinden mit weiteren Teilen (nicht gezeigt) einer Installation auf, vorzugsweise einer Gasinstallation, worauf ebenfalls vorliegend nicht weiter einzugehen ist.

Wie im unteren Bereich der Figur 1 erkennbar ist, weist der Einführabschnitt 2 zumindest abschnittweise einen geringeren Innendurchmesser ID als der Anschlussabschnitt 3 auf (Innendurchmesser ID'). Weiterhin ist an dem Einführabschnitt 2 eine Hinterschneidung oder ein Hinterschnitt 5 ausgebildet, indem ein an dem Anschlussteil 1 im Bereich des Anschlussabschnitts 3 angeformter Bord 5a den Einführabschnitt 2 über wenigstens einen Teil seiner Längserstreckung in axialer Richtung und mit radialem Abstand übergreift, wobei sich der Bord 5a nach Art eines Umfangsstegs mit seinem freien Ende 5b, an dem eine innenliegende Abschrägung 5c angeordnet ist, in Richtung des freien Endes oder Einführendes 2a des Einführabschnitts 2 erstreckt. Das Einführende 2a des Einführabschnitts 2 bzw. des Anschlussteils 1 dient zum Einführen des Letzteren in das Leitungselement , z.B. den bereits erwähnten (ummantelten) Wellschlauch, worauf weiter unten anhand der Figuren 2 bis 11 noch genauer eingegangen wird.

Die lichte Öffnungsweite OW der durch den Bord 5a gebildeten oder definierten Hinterschneidung 5 in radialer Richtung ist beispielsweise auf die Wellungshöhe des genannten Wellschlauchs bzw. allgemein auf die Wandstärke eines anzuschließenden Leitungselements (in Figur 1 nicht gezeigt) abgestimmt, worauf ebenfalls weiter unten noch genauer eingegangen wird.

An dem Einführabschnitt 2 weist das Anschlussteil 1 gemäß Figur 1 weiterhin zwei Umfangsnuten auf, nämlich eine erste Umfangsnut 2b sowie eine zweite Umfangsnut 2c. Die erste Umfangsnut 2b ist im Vergleich zu der zweiten Umfangsnut 2c relativ flacher und schmaler ausgebildet. Die zweite Umfangsnut 2c befindet sich näher an dem freien Einführende 2a des Einführabschnitts 2 als die erste Umfangsnut 2b. Die erste Umfangsnut 2b weist eine auf die Wellung des in Figur 1 nicht gezeigten Wellschlauchs abgestimmte Breite B auf, worauf weiter unten noch genauer eingegangen wird. Der in Figur 1 weiterhin eingezeichnete Mittenabstand MA zwischen den gestrichelt angedeuteten Mitten der Umfangsnuten 2b, 2c ist ebenfalls auf die Wellung des bereits angesprochenen Wellschlauchs (nicht gezeigt) abgestimmt und entspricht dabei vorzugsweise gerade einer Wellungsperiode, worauf weiter unten noch genauer eingegangen wird. Die zweite Umfangsnut 2c dient zum Aufnehmen eines Dichtelements, beispielsweise aus Elastomer-Material, welches in Figur 1 ebenfalls nicht gezeigt ist.

Figur 2 zeigt das Anschlussteil 1 gemäß Figur 1 zusammen mit einem Leitungsteil in Form eines ummantelten Wellschlauchs 6, wobei der eigentliche Wellschlauch mit dem Bezugszeichen 6a und die Ummantelung mit dem Bezugszeichen 6b bezeichnet ist. Bei dem Wellschlauch 6a handelt es sich um einen ringgewellten Metallschlauch. Die Ummantelung 6b ist als Geflecht- oder Gestrickemantel ausgebildet, beispielsweise aus Metall oder alternativ aus einem Kunststoff- oder Textilmaterial, insbesondere Carbon oder Aramid, und kann weiterhin noch eine in den Figuren nicht dargestellte äußere Kunststoffumhüllung, beispielsweise aus PE oder dergleichen, aufweisen.

Figur 2 zeigt das Zusammenwirken von ummanteltem Wellschlauch 6 und Anschlussteil 1 vor dem Aufweiten des Letzteren im Bereich des Einführabschnitts 2 zwecks Schaffung einer erfindungsgemäßen Anschlussverbindung bzw. einer erfindungsgemäßen Schlauchleitung, worauf weiter unten noch genauer eingegangen wird.

Gemäß Figur 2 ist der ummantelte Wellschlauch 6 mit seiner Schnittkante 6c in die durch den Bord 5a definierte Hinterschneidung 5 eingeführt worden, wobei die bereits angesprochene Einführschräge 5b unterstützend wirkt. In der zweiten Umfangsnut 2c des Anschlussteils 1 ist ein elastomeres Dichtelement 7 angeordnet. Aufgrund der vorstehend erwähnten Abstimmung - auch was die Lage der Nuten 2b, 2c relativ zur Hinterschneidung 5 anbelangt - befindet sich gerade ein Wellental 6d des ummantelten Wellschlauchs 6 im Bereich der ersten Umfangsnut 2b, deren bereits erwähnte Breite B im Wesentlichen einer entsprechenden Abmessung des Wellentals 6d entspricht. Aufgrund des ebenfalls bereits erwähnten Mittelabstands MA der beiden Umfangsnuten 2b, 2c wirkt ein weiteres Wellental 6d des ummantelten Wellschlauchs 6 mit dem in der zweiten Umfangsnut 2c befindlichen Dichtelement 7 zusammen.

Aufgrund der noch nicht erfolgten Aufweitung des Anschlussteils 1 im Bereich des Einführabschnitts 2 besitzt dieses nach wie vor in dem Einführabschnitt 2 und dem Anschlussabschnitt 3 unterschiedliche Innendurchmesser ID bzw. ID', worauf weiter oben anhand von Figur 1 schon explizit hingewiesen wurde.

Figur 3 zeigt nun den Zustand nach erfolgtem Aufweiten des Anschlussteils 1 im Bereich des Einführabschnitts 2 durch geeignete Werkzeugeinwirkung. Beispielhaft ist nur das Hineindrücken bzw. Hindurchziehen eines geeigneten Aufweitwerkzeugs zumindest in bzw. durch den Bereich des Einführabschnitts 2 symbolisch dargestellt. Die entsprechende Werkzeugbewegung ist in Figur 3 mittels eines Doppelpfeils WB für die Hinein- und Hinausbewegung symbolisiert. Auf den zugehörigen Aufweitvorgang soll an dieser Stelle nicht genauer eingegangen werden, da er grundsätzlich bereits in der DE 10 2007 042 605 A1 beschrieben ist, welche auf die vorliegende Anmelderin zurückgeht, auf welche Druckschrift entsprechend Bezug genommen wird. Auch alternative Werkzeugeinwirkungen sind möglich, beispielsweise bei Verwendung eines Segmentwerkzeugs.

Nach dem Einwirken des Werkzeugs besitzt das Anschlussteil 1 über seine gesamte axiale Erstreckung denselben Innendurchmesser ID', welcher dem bereits erwähnten Innendurchmesser des Anschlussabschnitts 3 vor dem Einwirken des Aufweitwerkzeugs entspricht. In seinem äußeren Bereich, das heißt insbesondere im Bereich des Zwischenabschnitts 4 bzw. im Bereich des Bords 5a ist das Anschlussteil 1 starr, das heißt es wird aufgrund der beschriebenen Werkzeugeinwirkung in den zuletzt genannten Bereichen, wie auch im Anschlussabschnitt 3 nicht umgeformt.

Durch die angesprochene Aufweitung des Anschlussteils 1 im Bereich des Einführabschnitts 2 kommt es zu einer Verpressung des ummantelten Wellschlauchs 6, das heißt sowohl des eigentlichen Wellschlauchs 6a, als auch seiner Ummantelung 6b zwischen dem radial nach außen verlagerten Einführabschnitt 2 des Anschlussteils 1 und dem feststehenden Bord 5a, wie in Figur 3 anschaulich gezeigt. Somit erfolgt in einem einzigen Arbeitsgang nicht nur die Fixierung des Wellschlauchs 6a an dem Anschlussteil 1, sondern zugleich auch die Fixierung der Ummantelung 6b, wobei der Bord 5a hier sowohl das Ende der Ummantelung 6b als auch das Ende des Wellschlauchs 6a radial außen umgibt. Diese spezielle Ausgestaltung vermindert das Risiko eines Korrosionsangriffs in diesem Bereich und vermeidet in kostengünstiger Weise die Notwendigkeit exakter Schnittkanten 6c für den ummantelten Wellschlauch 6, das heißt sowohl für den Welischlauch 6a als auch für die Ummantelung 6b.

Wie der Figur 3 noch zu entnehmen ist, greift der Wellschlauch 6a mit einem Wellental 6d gerade in die erste Umfangsnut 2b ein, was die Auszugskraft der Anordnung vergrößert. Mit einem weiteren Wellental 6d wirkt der Wellschlauch 6a mit dem Dichtelement 7 zusammen, welches in der zweiten Umfangsnut 2c angeordnet ist. Auf diese Weise ist eine insbesondere gasdichte Verbindung zwischen dem Anschlussteil 1 und dem Wellschlauch 6a geschaffen.

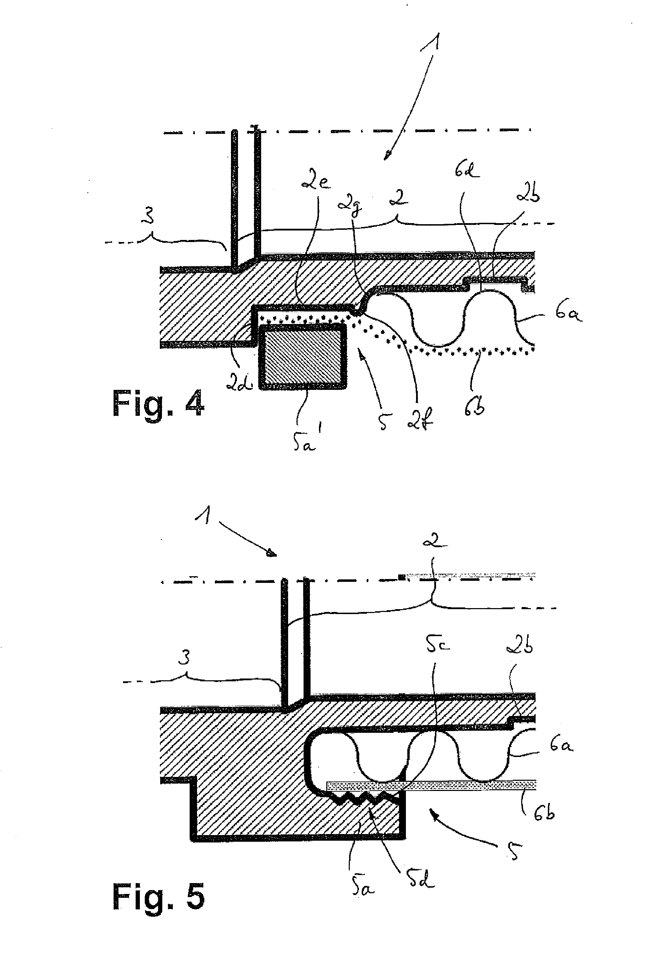

Figur 4 zeigt eine weitere Ausgestaltung des Anschlussteils 1, welches hier nur teilweise dargestellt ist. Gezeigt ist insbesondere der Übergangsbereich zwischen Anschlussabschnitt 3 und Einführabschnitt 2, wobei in Figur 4 (wie auch in den nachfolgenden Figuren 5 bis 7) auf eine explizite Bezeichnung des Zwischenabschnitts 4 (vgl. Figuren 1 bis 3) verzichtet wurde.

Nachfolgend sei jeweils nur auf Besonderheiten der Ausgestaltung des Anschlussteils 1 gemäß den Figuren 4 bis 7 näher eingegangen.

Während gemäß den Figuren 1 bis 3 der Bord 5a einstückig mit dem Einführabschnitt 2 bzw. den Zwischenabschnitt 4 des Anschlussteils 1 ausgeführt war, ist gemäß der Darstellung in Figur 4 die Hinterschneidung 5 dadurch gebildet, dass radial außerhalb des Einführabschnitts 2 ein Hülsen- oder Ringteil 5a' angeordnet ist, welches mit einer an dem Einführabschnitt 2 außen vorgesehenen Schulter oder Stufe 2d zusammenwirkt und den angeformten Bord 5a (vgl. Fig. 1 bis 3) funktional ersetzt. Das Hülsen- oder Ringteil 5a' kann grundsätzlich bereits vorab (stoffschlüssig) mit der Ummantelung 6b in deren Endbereich verbunden sein. Im Anordnungsbereich des Hülsen- oder Ringteils 5a' weist das Anschlussteil 1 einen glatten Anlagebereich 2e mit konstantem Außenradius auf, wie in Figur 4 dargestellt. Auf derjenigen Seite, welche der angesprochenen Stufe 2d gegenüberliegt, ist der genannte Anlagebereich 2e durch eine radial vorspringende Struktur 2f begrenzt. Im Anschluss an die genannte Struktur 2f weist das Anschlussteil 1 eine weitere Stufe 2g auf, welche als Axialanschlag für den Wellschlauch 6a dient, welcher vorliegend kürzer als die Ummantelung 6b ausgebildet ist. Der Wellschlauch 6a wirkt in der bereits beschriebenen Weise mit den Umfangsnuten 2b, 2c zusammen, wobei in Figur 4 nur die erste Umfangsnut 2b dargestellt ist.

Wie der Fachmann erkennt, zeigt Figur 4 erneut den Zustand vor Einwirkung des Aufweitwerkzeugs. Nach erfolgter Aufweitung kommt es zu einer Verpressung der Ummantelung 6b zwischen der Fläche 2e und dem Hülsen- oder Ringteil 5a', wobei die vorspringende Struktur 2f für eine Vergrößerung der Auszugs-/Haltekraft dient. Des Weiteren kommt es zu einer Verpressung des Wellschlauchs 6a durch Aufweitung des Anschlussteils 1 in dem Einführabschnitt 2, wie grundsätzlich bereits aus der genannten DE 10 2007 042 605 A1 bekannt. Durch eine geeignete Auswahl insbesondere der Höhe des Stufe 2g kommt es dabei außerdem zu einer definierten, radial vorgespannten Anlage der Ummantelung 6b an den Wellschlauch 6a.

Die Ausgestaltung des Anschlussteils 1 gemäß Figur 5 entspricht dagegen wiederum weitgehend derjenigen in den Figuren 1 bis 3. Hinzugekommen ist jedoch bei der Ausgestaltung in Figur 5 eine Profilierung 5d auf der Innenseite des Umfangsstegs 5a. Die genannte Profilierung 5d ist oberflächlich und in Umfangsrichtung durchgängig ausgebildet und weist gemäß Figur 5 im Schnitt eine sägezahnförmige Ausgestaltung auf. Auf diese Weise ist gegenüber den Ausgestaltungen in Figur 1 bis 3 die Halte- bzw. Auszugskraft vergrößert.

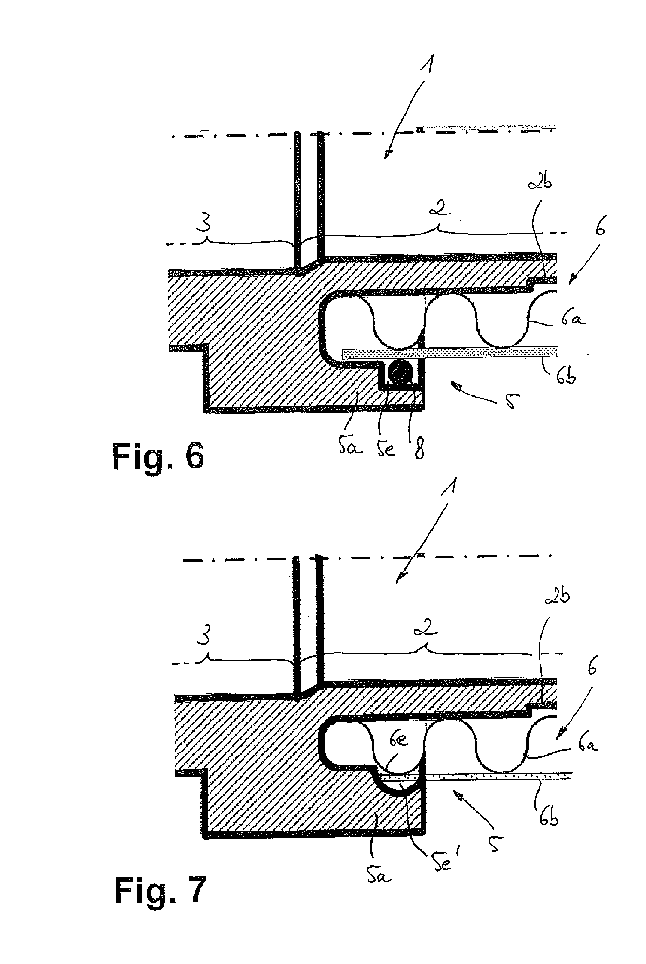

Gemäß der Ausgestaltung in Figur 6 weist das Anschlussteil 1 innerhalb der Hinterschneidung 5 an der radialen Innenseite des Umfangsstegs 5a eine umfänglich umlaufende Ausnehmung 5e auf, in welcher ein Dichtelement 8 in Form eines O-Rings aufgenommen ist. Das Dichtelement 8 wird durch die bereits mehrfach beschriebene Einwirkung des Aufweitwerkzeugs zusammen mit dem Wellschlauch 6a und der Ummantelung 6b verpresst, was in dem genannten Bereich eine zusätzliche Dichtwirkung zur Folge hat.

Gemäß der Ausgestaltung in Figur 7 schließlich ist innerhalb der Hinterschneidung 5 an der radialen Innenseite des Bords 5a eine umfänglich umlaufende Ausnehmung 5e' vorgesehen, deren Ausformung im Profil gerade der Kontur eines Wellenbergs 6e des Wellschlauchs 6a entspricht, so dass der Wellenberg 6e im Wesentlichen formschlüssig in der genannten Ausnehmung 5e' aufnehmbar ist bzw. aufgenommen wird, wenn bei dem Anschlussteil 1 gemäß Figur 7 die bereits mehrfach beschriebene radiale Aufweitung im Bereich des Einführabschnitts 2 erfolgt.

Es sei an dieser Stelle nochmals angemerkt, dass sich insbesondere die Ausgestaltungen des Anschlussteils 1 gemäß den Figuren 1 bis 7 grundsätzlich auch für die Schaffung von Anschlussverbindungen zwischen dem genannten Anschlussteil 1 und einem Wellschlauch 6a bzw. einem anderen Leitungselement eignen, welcher bzw. welches nicht von einer Ummantelung 6b umgeben ist. Insbesondere durch die Ausgestaltung gemäß Figur 7, welche einen Formschluss zwischen einem Wellenberg 6e des Wellschlauchs 6a und dem Anschlussteil 1 im Bereich der Ausnehmung 5e' anstrebt, lässt sich auch ohne Ummantelung 6b eine äußerst zugfeste Anschlussverbindung herstellen, was in Figur 8 aus Gründen der Vollständigkeit noch explizit dargestellt ist.

Figur 9 zeigt das Anschlussteil 1 gemäß den Figuren 1 bis 3 im nicht geweiteten Ausgangszustand für die Schaffung einer Fluidleitung bzw. einer Anschlussverbindung. Allerdings ist hier das Leitungselements nicht als (ummantelter) Wellschlauch sondern als einlagiges, glattzylindrisches Rohrelement 6' ausgebildet.

Ähnlich stellt sich der Sachverhalt in den Figuren 10 und 11 dar, wobei hier das Leitungselement als mehrlagiges Rohrelement 6" ausgebildet ist, welches ohne Beschränkung eine innere, starre Lage 6a" aus Aluminium oder einem anderen metallischen oder nicht-metallischen Werkstoff aufweist, die außen und innen mit einer Beschichtung 6b" versehen ist, beispielsweise aus PE oder dergleichen, je nach Anforderung. Der mehrlagige Aufbau ist insbesondere der vergrößerten Darstellung in Figur 10 gut zu entnehmen.

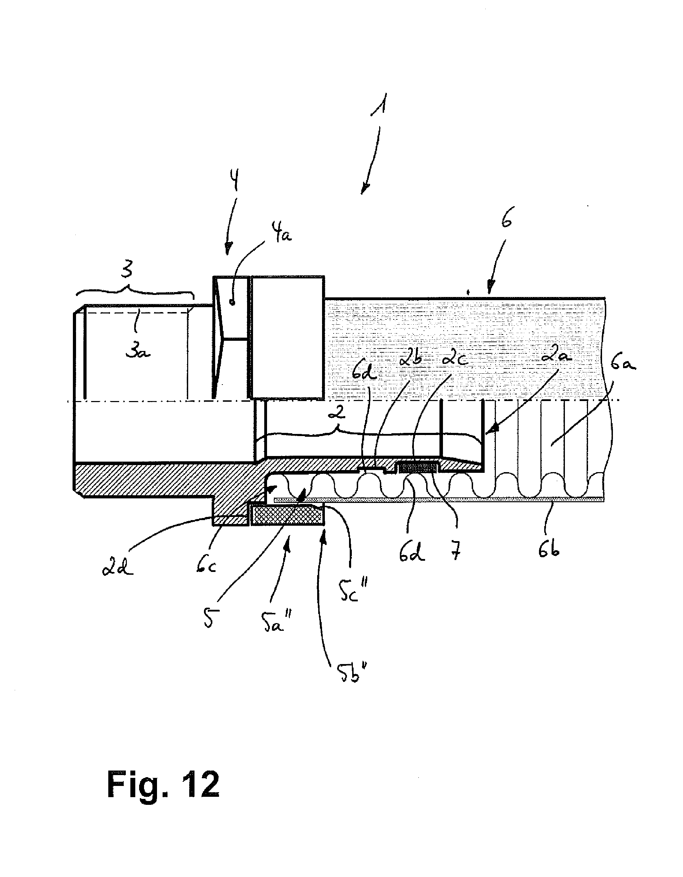

Figur 12 zeigt eine weitere Ausgestaltung der erfindungsgemäßen Anschlussverbindung zwischen einem Wellschlauch 6, einer Wellschlauch-Ummantelung 6b und einem Anschlussteil 1, welches Anschlussteil 1 im Wesentlichen dem Anschlussteil gemäß Figur 4 entspricht. Nachfolgend sei - insbesondere ausgehend von der Figur 4 - auf bestimmte Besonderheiten der Ausgestaltung gemäß Figur 12 näher eingegangen.

Wie auch beim Gegenstand der Figur 4 ist der die Hinterschneidung 5 definierende Bord als separates Bauteil 5a" mit Einführschräge 5c" an seinem freien Ende 5b" ausgebildet. Dabei handelt es sich bei dem separaten Bauteil 5a" um ein Elastomer bzw. einen Elastomerabschnitt aus einem transparenten Material, um das Zusammenfügen von Leitungselement 6 und Anschlussteil 1 im Verbindungsbereich von außen visuell kontrollieren zu können. An dem Anschlussteil 1 ist außen eine Stufe oder ein Absatz 2d ausgebildet, welche/r das der Abschrägung 5c" bzw. dem freien Ende 5b"gegenüber liegende Ende des separaten Bauteils 5a" aufnimmt. Dabei kann der Außendurchmesser des Anschlussteils 1 im Bereich der Stufe 2d kleiner sein als der Innendurchmesser des separaten Bauteils 5a", so dass letzteres mit einer gewissen Vorspannung an dem Anschlussteil 1 montiert ist. Gleiches gilt in Bezug auf den Außendurchmesser des Leitungselements 6 bzw. des Wellschlauchs 6a mit seiner Ummantelung 6b. Nachdem das Leitungselement 6 in den Bereich der Hinterschneidung 5 eingeführt wurde, erfolgt die Verbindung zwischen Anschlussteil 1 und Leitungselement 6 durch Aufweitung des Anschlussteils 1 im Bereich 2, worauf bereits in vielfälltigerweise detailliert eingegangen wurde.

Wie der Fachmann erkennt, zeigen die vorstehend beschriebenen Figuren 2 bis 8 und 12 jeweils Leitungselemente 6 in Form eines Wellschlauchs 6a, welcher Wellschlauch zum Schaffen einer erfindungsgemäßen Anschlussverbindung in einem Wellental getrennt wurde (vgl. die Schnittkante 6c des Wellschlauchs 6a). Das Anschlussteil kann aber auch mit einem am Wellenberg getrennten Wellschlauch 6a verbunden werden, wodurch sich eine leichtere axiale Positionierung und eine erhöhte Übertragung der radialen Aufweitung von Bereich 2 auf den Umfangssteg 5a mit erhöhter Dichtwirkung ergibt.

## Patentansprüche

1. Anschlussteil (1) für ein Leitungselement (6; 6; 6"), vorzugsweise für Gasinstallationen, mit einem aufweitbaren Einführabschnitt (2), der zum Einführen in das Leitungselement (6; 6; 6") vorgesehen ist, und mit einem Anschlussabschnitt (3) zum Anschließen an weitere Teile einer Installation, vorzugsweise Gasinstallation, wobei der Einführabschnitt (2) zumindest abschnittweise einen geringeren Innendurchmesser (ID) als der Anschlussabschnitt (3) aufweist, und wobei an dem Anschlussabschnitt (3) ein axial vorstehender Bord (5a; 5a'; 5a") angeordnet ist, welcher den Einführabschnitt (2) mit radialem Abstand (OW) über wenigstens einen Teil der Längserstreckung des Einführabschnitts (2) in Richtung eines freien Einführendes (2a) übergreift.

2. Anschlussteil (1) nach Anspruch 1, **dadurch gekennzeichnet, dass** innerhalb der durch den Bord (5a) gebildeten Hinterschneidung (5), vorzugsweise an der radialen Innenseite des Bords (5a), eine oberflächliche, vorzugsweise in Umfangsrichtung durchgängige Profilierung (5d) vorgesehen ist.

3. Anschlussteil (1) nach Anspruch 1 oder 2, **dadurch gekennzeichnet, dass** innerhalb der durch den Bord (5a) gebildeten Hinterschneidung (5), vorzugsweise an der radialen Innenseite des Bords (5a), eine umfänglich umlaufende Ausnehmung (5e') ausgebildet ist, in welcher ein Wellenberg (6e) eines Leitungselements in Form eines Wellschlauchs (6a) formschlüssig aufnehmbar ist.

4. Anschlussteil (1) nach mindestens einem der Ansprüche 1 bis 3, **dadurch gekennzeichnet, dass** innerhalb der durch den Bord (5a) gebildeten Hinterschneidung (5), vorzugsweise an der radialen Innenseite des Bords (5a), eine umfänglich umlaufende Ausnehmung (5e) ausgebildet ist, in welcher ein Dichtelement (8) aufgenommen oder aufnehmbar ist, vorzugsweise ein O-Ring-Dichtelement, wobei die Ausnehmung vorzugsweise zu dem freien Einführende (2a) hin öffnet.

5. Anschlussteil (1) nach mindestens einem der Ansprüche 1 bis 4, **dadurch gekennzeichnet, dass** innerhalb der durch den Bord (5a) gebildeten Hinterschneidung (5), vorzugsweise an der radialen Innen- oder Außenseite des Bords (5a), eine radial vorspringende Struktur (2f) ausgebildet ist, welche vorzugsweise umfänglich umlaufend ausgebildet ist.

6. Anschlussteil (1) nach mindestens einem der Ansprüche 1 bis 5, **dadurch gekennzeichnet, dass** der Bord einstückig (5a; 5a") mit dem restlichen Anschlussteil oder als separates Bauteil (5a'), vorzugsweise in Form einer Hülse oder eines Rings, ausgebildet ist, wobei das separate Bauteil (5a'; 5a") vorzugsweise mit einer an dem Einführabschnitt (2) außen vorgesehenen Stufe (2d) unter Bildung der Hinterschneidung (5) zusammenwi rkt.

7. Anschlussteil (1) nach mindestens einem der Ansprüche 1 bis 6, **dadurch gekennzeichnet, dass** das separate Bauteil (5a") als schlauchförmiger Elastomer (5a") ausgebildet ist und vorzugsweise gegenüber dem Anschlussteil (1), höchst vorzugsweise der Stufe (2d) gemäß Anspruch 6, einen verminderten Durchmesser aufweist.

8. Anschlussteil (1) nach mindestens einem der Ansprüche 1 bis 7, **dadurch gekennzeichnet, dass** der Elastomerschlauch (5a") in einem transparenten Material ausgebildet ist.

9. Anschlussteil (1) nach mindestens einem der Ansprüche 1 bis 8, **dadurch gekennzeichnet, dass** an dem Einführabschnitt (2) wenigstens eine Umfangsnut (2b; 2c) ausgebildet ist, vorzugsweise eine erste (2b) und eine zweite (2c) Umfangsnut.

10. Anschlussteil (1) nach Anspruch 9, **dadurch gekennzeichnet, dass** in der Umfangsnut (2c), vorzugsweise in der ersten oder der zweiten Umfangsnut, ein Dichtelement (7) angeordnet ist.

11. Anschlussteil (1) nach mindestens einem der Ansprüche 1 bis 10, **dadurch gekennzeichnet, dass** an dem Bord (5a) eine Einführschräge (5c) zum Einführen eines Leitungselements (6; 6; 6") ausgebildet ist.

12. Anschlussverbindung zwischen einem Leitungselement (6; 6; 6") und dem Anschlussteil (1) gemäß einem der vorhergehenden Ansprüche, wobei das Leitungselement (6, 6', 6") oder zumindest eine Ummantelung (6b) des Leitungselements (6) mit seinem bzw. ihrem einen Ende in die durch den Bord (5a; 5a'; 5a") gebildete Hinterschneidung (5) eingeführt und dort durch Aufweitung des Anschlussteils (1) im Bereich des Einführabschnitts (2) kraft- und/oder formschlüssig gehalten ist, wobei der Bord (5a; 5a'; 5a") das Leitungselement (6, 6', 6") oder zumindest das Ende der Ummantelung (6b) radial außen umgibt.

13. Anschlussverbindung nach Anspruch 12, **dadurch gekennzeichnet, dass** das Leitungselement (6) als Wellschlauch (6a) ausgebildet ist, welcher Wellschlauch vorzugsweise eine Ummantelung (6b) aufweist, vorzugsweise umfassend ein Geflecht- oder Gestrickematerial und/oder eine Kunststoffhülle, wobei höchst vorzugsweise der Wellschlauch (6a) auf einem Wellenberg getrennt wurde.

14. Anschlussverbindung nach Anspruch 12, **dadurch gekennzeichnet, dass** das Leitungselement als einlagiges (6') oder mehrlagiges (6") Rohrelement ausgebildet ist, vorzugsweise als Aluminiumrohr (6a') mit innerer und/oder äußerer Beschichtung (6b") aus Polyethylen.

15. Anschlussverbindung nach mindestens einem der Ansprüche 12 bis 14, **dadurch gekennzeichnet, dass** das Leitungselement (6; 6; 6") durch Aufweitung des Anschlussteils (1) im Bereich des Einführabschnitts (2) kraft- und/oder formschlüssig auf dem Einführabschnitt (2) zwischen Einführabschnitt (2) und Bord (5a; 5a'; 5a") gehalten ist.

16. Anschlussverbindung nach zumindest Anspruch 13 oder Anspruch 15, **dadurch gekennzeichnet, dass** der Wellschlauch (6a) mit einer Wellung (6d) in die eine Umfangsnut (2b) gemäß Anspruch 10 und/oder in die Ausnehmung (5e') gemäß Anspruch 3 eingreift.

17. Anschlussverbindung nach zumindest Anspruch 13, Anspruch 15 oder Anspruch 16, **dadurch gekennzeichnet, dass** der Wellschlauch (6a) mit einer Wellung (6d) mit dem Dichtelement (7) gemäß Anspruch 10 zusammenwirkt.

18. Fluidleitung mit einem Leitungselement (6; 6; 6") und wenigstens einem Anschlussteil (1) gemäß einem der Ansprüche 1 bis 11, wobei zwischen dem Leitungselement (6; 6; 6") und dem Anschlussteil (1) eine Anschlussverbindung gemäß einem der Ansprüche 12 bis 17 ausgebildet ist, wobei das Leitungselement (6; 6; 6") oder zumindest eine Ummantelung (6b) des Leitungselements (6) mit seinem bzw. ihrem einen Ende in die durch den Bord (5a; 5a', 5a") gebildete Hinterschneidung (5) eingeführt und dort durch Aufweitung des Anschlussteils (1) im Bereich des Einführabschnitts (2) kraft- und/oder formschlüssig gehalten ist, wobei der Bord (5a; 5a'; 5a") das Ende des Leitungselements (6; 6; 6") oder zumindest das Ende der Ummantelung (6b) radial außen umgibt.

19. Fluidleitung nach Anspruch 18, **dadurch gekennzeichnet, dass** das Leitungselement (6) als Wellschlauch (6a) mit einer Ummantelung (6b), vorzugsweise umfassend ein Geflecht- oder Gestrickematerial und/oder eine Kunststoffhülle, ausgebildet ist, oder dass das Leitungselement als einlagiges (6') oder mehrlagiges (6") Rohrelement ausgebildet ist, vorzugsweise als Aluminiumrohr (6a") mit innerer und/oder äußerer Beschichtung (6b") aus Polyethylen.

20. Verfahren zum Herstellen einer Anschlussverbindung zwischen einem Leitungselement (6; 6; 6") und dem Anschlussteil (1) gemäß einem der Ansprüche 1 bis 11, wobei das Leitungselement (6; 6; 6") oder zumindest eine Ummantelung (6b) des Leitungselements (6) mit seinem bzw. ihrem einen Ende in die durch den Bord (5a; 5a'; 5a") gebildete Hinterschneidung (5) eingeführt wird, und wobei anschließend das Anschlussteil (1) zumindest im Bereich des Einführabschnitts (2) durch Einwirkung eines Aufweitwerkzeugs radial aufgeweitet wird, so dass das Ende des Leitungselements (6; 6; 6") oder zumindest die Ummantelung (6b) kraft- und/oder formschlüssig in der Hinterschneidung (5) gehalten ist, wobei der Bord (5a; 5a'; 5a") das Ende des Leitungselements (6; 6; 6") oder zumindest das Ende der Ummantelung (6b) radial außen umgibt.

21. Verfahren nach Anspruch 20, **dadurch gekennzeichnet, dass** vor dem Aufweiten das Dichtelement (8) gemäß Anspruch 4 in die Ausnehmung (5e) eingesetzt wird.

22. Verfahren zum Herstellen einer Fluidleitung und wenigstens einem Anschlussteil (1) gemäß einem der Ansprüche 1 bis 11, wobei zwischen dem das Leitungselement (6; 6; 6") und dem Anschlussteil (1) eine Anschlussverbindung gemäß einem der Ansprüche 12 bis 17 ausgebildet wird, vorzugsweise gemäß dem Verfahren nach Anspruch 20 oder 21, wobei das Leitungselement (6; 6; 6") oder zumindest eine Ummantelung (6b) des Leitungselements (6) mit seinem bzw. ihrem einen Ende in die durch den Bord (5a; 5a'; 5a") gebildete Hinterschneidung (5) eingeführt wird, und wobei anschließend das Anschlussteil (1) zumindest im Bereich des Einführabschnitts (2) durch Einwirkung eines Aufweitwerkzeugs radial aufgeweitet wird, so dass das Ende des Leitungselements (6; 6; 6") oder zumindest die Ummantelung (6b) kraft- und/oder formschlüssig in der Hinterschneidung (5) gehalten ist, wobei der Bord (5a; 5a'; 5a") das Ende des Leitungselements (6; 6; 6") oder zumindest das Ende der Ummantelung (6b) radial außen umgibt.
